# EUROPÄISCHE PATENTSCHRIFT

(11) **EP 4 180 899 B1**
(45) Veröffentlichungstag und Bekanntmachung des Hinweises auf die Patenterteilung: **23.04.2025**
(21) Anmeldenummer: 21207658.2
(22) Anmeldetag: 10.11.2021
(51) Int. Cl.: G05D 23/19, F24D 19/10

(54) **HEIZKÖRPERTHERMOSTAT**
RADIATOR THERMOSTAT
THERMOSTAT DE RADIATEUR

(43) Veröffentlichungstag der Anmeldung: 17.05.2023
(73) Patentinhaber: tado GmbH, 80637 München (DE)
(72) Erfinder: GHOSHAL, Fabian, 10999 Berlin (DE); ARAYA, Jhinneska, 80637 München (DE); LACHER, Maximilian, 80637 München (DE); GEPPERTH, Jürgen, 80637 München (DE); LETTL, Benjamin, 80637 München (DE)
(74) Vertreter: Ridderbusch, Oliver

(56) Entgegenhaltungen:
- EP-A1- 2 400 227
- WO-A1-98/37470
- DE-A1- 102004 060 174
- DE-A1- 102010 022 399
- DE-A1- 3 515 590
- DE-U1- 20 304 439

## Beschreibung

### TECHNISCHES GEBIET

Die vorliegende Offenbarung bezieht sich auf einen Thermostaten zum Einstellen eines Ventils eines Heizkörpers. Ein derartiger Thermostat wird auch als Heizungsventil-Thermostataufsatz, Thermostatkopf oder Heizkörperthermostat bezeichnet.

### HINTERGRUND

Typische Thermostate haben ein zylinderförmiges Gehäuse mit einer Bodenseite, einer Stirnseite und einer Mantelfläche. Ein Montageanschluss zum Montieren des Thermostaten an einem Heizkörper ist an der Bodenseite vorhanden. Elektronische Ausführungen umfassen einen Motor mit Stellglied, welches am Montageanschluss auf ein Ventil des Heizkörpers einwirkt. Elektronische Thermostate weisen außerdem in der Regel einen Bildschirm auf, über den z.B. eine eingestellte Temperatur oder andere Thermostateinstellungen angezeigt werden. Der Bildschirm befindet sich je nach Variante an der Stirnseite (z.B. beim US-Design Nr. US D603,277 S oder bei CN 108548002 B, DE 3 515 590 A1 und DE 10 2013 113 527 A1) oder an der Mantelfläche (z.B. in WO 98/37470 A1 sowie von der Anmelderin in dem EU-Gemeinschaftsgeschmacksmuster Nr. 004001980-0002 offenbart). DE 10 2010 022 399 A1 beschreibt einen Thermostaten mit einem Elektromotor, Antriebsrad und Zugmittel (z.B. Flachriemen, Keilriemen, Synchronriemen oder Ketten), um ein Stellelement zu bewegen. DE 20 304 439 U1 beschreibt einen motorisierten Thermostaten mit LCD-Anzeige. Aus DE 10 2004 060 174 A1 und aus EP 2 400 227 A1 ist jeweils ein Thermostatkopf bekannt, welcher einen Motor, eine Batterie und einen Bildschirm mit daneben angeordneten Tasten umfasst.

Allgemein sollen Thermostate kompakte Gehäuseabmessungen haben und eine Ablesbarkeit des Bildschirms in möglichst allen Montagesituationen ermöglichen. Beispielsweise kann es sein, dass an der Seite des Heizkörpers, an welcher der Thermostat zu montieren ist, nur wenig Platz bis zu einer Zimmerwand verbleibt. Befindet sich bei herkömmlichen Thermostaten der Bildschirm an der Stirnseite des Gehäuses und zeigt somit zur Zimmerwand, so ist der Bildschirm eventuell nur schwer oder gar nicht sichtbar. In diesen Situationen ist ein Thermostat geeigneter, dessen Bildschirm an der Mantelfläche angeordnet ist. Bei bekannten Thermostaten mit Bildschirm an der Mantelfläche sind jedoch eine oder mehrere Batterien über eine Abdeckung an der Stirnseite zugänglich, wodurch die Zylinderlängsabmessung stärker vergrößert ist und/oder die Zugänglichkeit je nach Montagesituation erschwert sein kann.

### KURZFASSUNG

Als eine **Aufgabe** der Erfindung kann angesehen werden, einen Thermostaten für einen Heizkörper bereitzustellen, welcher bei kompakten Gehäuseabmessungen eine möglichst gute Bedienbarkeit ermöglicht.

Diese Aufgabe wird durch den Thermostaten mit den Merkmalen des Anspruchs 1 gelöst.

Ein erfindungsgemäßer Thermostat zum Einstellen eines Heizkörperventils umfasst ein Gehäuse mit einer Längsachse, welche sich von einer Bodenseite des Gehäuses in Richtung einer Stirnseite des Gehäuses erstreckt. Der Thermostat umfasst außerdem einen zumindest teilweise im Gehäuse angeordneten Motor mit einem Stellglied zum Einwirken auf das Heizkörperventil und einen Bildschirm an der Stirnseite des Gehäuses. Der Motor ist quer, insbesondere senkrecht, zur Längsachse angeordnet, so dass eine Bewegungsrichtung des Stellglieds quer, insbesondere senkrecht, zur Längsachse steht.

Herkömmliche Thermostate, die einen Bildschirm an der Stirnseite aufweisen und bei denen die Bewegungsrichtung des Stellglieds parallel zur Längsachse des Gehäuses liegt, haben eine verhältnismäßig große Längsabmessung. Diese beruht maßgeblich auf der Längsabmessung des Motors, der Größe eines Montagebereichs zum Montieren am Heizkörperventil und der Tiefe der für den Bildschirm nötigen Bauteile. Demgegenüber führt bei der Erfindung die Anordnung des Motors mit Stellglied quer zur Längsachse des Gehäuses dazu, dass die Gehäuseabmessung in Längsrichtung reduziert werden kann. Insbesondere verhindern eine verhältnismäßig lange Motorabmessung und der Montagebereich keine kompakte Gehäusebauform in Längsrichtung. Quer zur Längsrichtung kann das Gehäuse ebenfalls kompakter ausfallen, das heißt einen kleineren Querschnitt haben, wenn ein Motorteil mit Stellglied aus einem im Wesentlichen zylindrischen Gehäuseteil radial herausragt. Hierdurch kann der Radius dieses zylindrischen Gehäuseteils prinzipiell sogar kleiner als die Längsabmessung des Motors mit Stellglied sein. Gleichzeitig erlaubt die erfindungsgemäße Anordnung des Bildschirms relativ zur Bewegungsrichtung / Bewegungsachse des Stellglieds, dass das Gehäuse in einer Rotationsausrichtung montiert werden kann, in welcher eine Sichtbarkeit des Bildschirms für weitgehend beliebige Heizkörper und Räume gewährleistet ist. Diese Vorteile werden im Späteren beispielhaft an Hand der Figuren anschaulicher erläutert.

### Optionale Gestaltungen

Varianten des erfindungsgemäßen Thermostaten sind Gegenstand der abhängigen Ansprüche und werden in der folgenden Beschreibung erläutert.

### Gehäuseform und Motoranordnung

Das Gehäuse kann eine Mantelfläche zwischen der Stirnseite und der Bodenseite aufweisen. Die Mantelfläche kann im Querschnitt insbesondere rund oder kreisförmig sein, womit das Gehäuse im Wesentlichen eine Zylinderform bildet. Zusätzlich kann an der Mantelfläche ein nach außen hervorstehender Gehäusevorsprung gebildet sein, dessen Ende einen Montagebereich zum Befestigen an einem Heizkörper bildet. Hierzu kann eine Überwurfmutter am Ende des Gehäusevorsprungs angeordnet sein. Eine Achse, um welche die Überwurfmutter ringförmig verläuft, steht somit quer bzw. senkrecht zur Längsachse des Gehäuses. Der Gehäusevorsprung kann einen runden, insbesondere kreisförmigen Querschnitt haben und hohl sein. Das Stellglied des Motors ragt in den Gehäusevorsprung hinein bzw. verläuft zumindest teilweise innerhalb des Gehäusevorsprungs.

In einem Schnitt entlang der Längsachse des Gehäuses und durch den Gehäusevorsprung kann der Thermostat somit eine T-Form haben, wobei zwei gegenüberliegende Enden der T-Form die Stirnseite und die Bodenseite des Gehäuses bilden, und am dritten Ende der T-Form die Überwurfmutter angeordnet ist.

Der Motor kann um die Bewegungsachse seines Stellglieds verschiedene Radialabmessungen haben. Eine (Rotations-)ausrichtung des Motors im Gehäuse kann so gewählt sein, dass seine maximale Radialabmessung zum Bildschirm hin gewandt ist. Dadurch wird zu der Bodenseite hin Raum für eine wiederaufladbare Batterie bereitgestellt. Dies erlaubt bei kompakter Gehäuseform eine verhältnismäßig große Dimensionierung der wiederaufladbaren Batterie, womit seltener Aufladevorgänge nötig sind.

Insbesondere wenn die wiederaufladbare Batterie kleine Abmessungen hat, kann alternativ aber auch vorgesehen sein, den Motor im Gehäuse so auszurichten, dass seine maximale Radialabmessung zur Bodenseite hin zeigt. Eine Zugänglichkeit zum Bildschirm und zu einer Bodenabdeckung mit Batterie (welche später näher beschrieben wird) kann in vielen Montagesituationen verbessert werden, wenn der Gehäusevorsprung, über den der Thermostat am Heizkörper montiert wird, in etwa mittig am Gehäuse angeordnet ist.

### Bodenabdeckung mit Akku-Pack

An der Bodenseite des Gehäuses kann eine abnehmbare Bodenabdeckung angeordnet sein. Die Bodenabdeckung kann beispielsweise durch eine Einrast- oder Schraubverbindung lösbar befestigt sein, insbesondere an Gehäuseteilen, welche die Mantelfläche mitbilden. Die Bodenabdeckung kann mit einer wiederaufladbaren Batterie verbunden sein, so dass die wiederaufladbare Batterie gemeinsam mit der Bodenabdeckung als eine einzige Komponente abnehmbar ist. Die Batterie kann hierbei innerhalb der Bodenabdeckung aufgenommen sein, so dass die Bodenabdeckung die Batterie vollständig umschließt. Prinzipiell könnte die Batterie aber auch nicht mit der Bodenabdeckung verbunden sein, so dass die Batterie separat aus dem Gehäuse entnommen werden kann, wenn die Bodenabdeckung entfernt ist.

Die Bodenabdeckung kann an einer Innenseite elektrische Kontakte, insbesondere einen Steckanschluss, z.B. einen USB-Anschluss, zum Herstellen einer elektrischen Verbindung aufweisen, über welche die wiederaufladbare Batterie aufgeladen werden kann. Als "Innenseite" soll eine im zusammengebauten Zustand des Thermostaten von außen nicht sichtbare Seite verstanden werden. Der Steckanschluss kann auch eine Buchse zum Anschließen eines Kabels sein. Alternativ kann ein Kabel mit Stecker in der Bodenabdeckung integriert sein. Anstelle eines Steckanschlusses können auch Mittel zum kontaktlosen Aufladen der Batterie in der Bodenabdeckung enthalten sein, insbesondere eine Spule zur induktiven Energieübertragung. Die Bodenabdeckung kann eine Elektronik enthalten, die das Aufladen der Batterie steuert. Die elektrischen Kontakte können zum sicheren Herstellen einer elektrischen Verbindung über einen Federmechanismus gebildet sein. Dieselben elektrischen Kontakte oder weitere elektrische Kontakte können dazu gestaltet sein, im zusammengebauten Zustand eine Energieversorgung von der Batterie der Bodenabdeckung zu anderen elektrischen Komponenten des Thermostaten bereitzustellen.

Insbesondere an einer Außenseite kann die Bodenabdeckung eine Batteriestatus-Anzeige aufweisen, beispielsweise eine LED oder ein anderes Leuchtelement. Die Elektronik der Bodenabdeckung kann dazu eingerichtet sein, über die Batteriestatus-Anzeige anzuzeigen, wenn eine Untergrenze des Batteriestands unterschritten ist und ein Nutzer daher die Bodenabdeckung lösen und ein Aufladen starten sollte. Zudem oder alternativ kann über die Batteriestatus-Anzeige angezeigt werden, wenn ein Ladevorgang läuft, und wenn die Batterie vollständig geladen ist und ein Ladevorgang daher beendet werden kann. Die Batteriestatus-Anzeige kann auch an einer Innenseite der Bodenabdeckung angeordnet sein, so dass sie nur bei abgenommener Bodenabdeckung sichtbar ist. Diese Anordnung ist insbesondere geeignet, wenn die Batteriestatus-Anzeige zum Hinweisen auf einen laufenden Ladevorgang und/oder ein Ende des Ladevorgangs genutzt wird. Indem auf eine Batteriestatus-Anzeige an der Gehäuseaußenseite verzichtet wird, kann die Gehäusedichtigkeit verbessert und/oder Partikelablagerungen an Rändern der Anzeige reduziert werden.

Durch die Integration der wiederaufladbaren Batterie in die Bodenabdeckung ist es möglich, dass verschieden große Batterien angeboten bzw. genutzt werden können, ohne dass Änderungen an den übrigen Komponenten des Thermostaten nötig wären. So können in Längsrichtung des Thermostaten verschieden große Bodenabdeckungen angeboten werden, welche sich in der gespeicherten Energie der aufgenommenen Batterie unterscheiden. Bei einem vorhandenen Thermostaten kann die Batterie leicht gegen eine Batterie mit größerer Speicherkapazität ersetzt werden, indem die vorhandene Bodenabdeckung mit Batterie abgenommen und durch eine entsprechend andere Bodenabdeckung mit leistungsfähigerer Batterie ersetzt wird. Auf Herstellungsseite besteht zudem der Vorteil, dass verschiedene Speicherkonfigurationen angeboten werden können, für welche die Thermostatkomponenten bis auf die Bodenabdeckung mit Batterie im Wesentlichen gleich bleiben können.

Zusätzlich zu der beschriebenen wiederaufladbaren Batterie kann im Gehäuse eine sekundäre wiederaufladbare Batterie angeordnet sein. Eine Steuerelektronik im Gehäuse kann dazu eingerichtet sein, die sekundäre wiederaufladbare Batterie über die wiederaufladbare Batterie der Bodenabdeckung aufzuladen und (ausschließlich) im Fall, dass die Bodenabdeckung mit der wiederaufladbaren Batterie abgenommen ist, die sekundäre wiederaufladbare Batterie zur Energieversorgung von Komponenten des Thermostaten zu nutzen, beispielsweise zur Energieversorgung des Bildschirms und/oder des Motors. Hierdurch können Einstellungen des Thermostaten auch während eines Ladevorgangs der wiederaufladbaren Batterie geändert werden. Es kann vorgesehen sein, dass eine Energiespeicherkapazität der sekundären wiederaufladbaren Batterie zwischen 10% und 30% der Energiespeicherkapazität der wiederaufladbaren Batterie beträgt.

In einer Abwandlung der beschriebenen Ausführungen ist die Bodenabdeckung mit einem Federmechanismus versehen, durch welchen sie sich bei Betätigung axial nach außen bewegt, aber fest mit dem übrigen Gehäuse verbunden bleibt. In dieser ausgefahrenen Position gibt sie eine entnehmbare Batterie frei oder eine entnehmbare Einheit, welche außer der wiederaufladbaren Batterie auch eine Steuerelektronik und/oder elektrische Ladeanschlüsse aufweist.

### Stirnseite mit Bildschirm

Der Thermostat umfasst eine im Gehäuse angeordnete Steuerelektronik, welche dazu eingerichtet ist, auf dem Bildschirm einen Inhalt auswählbar in verschiedenen Orientierungen anzuzeigen. Hierdurch kann der Inhalt unabhängig von der Montagerichtung des Thermostaten in korrekter Orientierung angezeigt werden. Insbesondere kann vorgesehen sein, dass der dargestellte Inhalt in 90°-Schritten gedreht wird. Durch diese Schrittgröße wird sichergestellt, dass ein Nutzer nicht versehentlich eine störende leicht schräge Orientierung einstellt. Der Bildschirm selbst kann z.B. eine Quadratform oder Kreisform haben, was die Darstellbarkeit in verschiedenen Orientierungen erleichtert. Der Bildschirm kann mit einer prinzipiell beliebigen Darstellungstechnologie gebildet sein, z.B. als LCD-Bildschirm, LED-Bildschirm oder OLED-Bildschirm.

Ein Außenrand der Stirnseite kann ein drehbares Einstellrad bilden, welches eine Steuerung des Thermostaten ermöglicht. Das Einstellrad hat folglich eine Ringform, wobei eine zentrale Achse durch die Ringform quer oder senkrecht zur Bewegungsrichtung des Stellglieds des Motors liegt. Durch diese Anordnung ist das Einstellrad in weitgehend beliebigen Montagesituationen gut zugänglich, im Gegensatz zu Einstellrädern herkömmlicher Thermostate. Eine Drehung des Einstellrads wird in ein elektrisches Signal umgewandelt und von einer zugehörigen Elektronik interpretiert, beispielsweise als Weiterschaltung in einem Menü oder als Änderung einer Solltemperatur. Das Einstellrad kann drückbar sein, um eine Befehlseingabe vorzunehmen, beispielsweise um eine ausgewählte Solltemperatur zu bestätigen.

### Leiterplattenanordnung

Die beschriebene (Steuer-)Elektronik kann mittels einer oder mehreren Leiterplatten verwirklicht werden, welche prinzipiell beliebig im Gehäuse angeordnet sein können. Vorzugsweise kann eine Leiterplattenanordnung für kompakte Gehäuseabmessungen gewählt werden. Hierzu kann im Gehäuse eine erste Leiterplatte mit (ausschließlich oder unter anderem) Komponenten zur Steuerung des Bildschirms und eine zweite Leiterplatte, die mit der wiederaufladbaren Batterie wirkungsmäßig verbunden ist, angeordnet sein. Die erste Leiterplatte kann mit der zweiten Leiterplatte durch beispielsweise flexible Leitungen verbunden sein und über die zweite Leiterplatte mit Energie versorgt werden. Die erste Leiterplatte kann im Gehäuse zur Stirnseite hin angeordnet sein und mit ihrer Hauptebene parallel zum Bildschirm angeordnet sein. Die Hauptebene wird durch die beiden Richtungen, in welcher die Leiterplatte ihre größten Abmessungen hat, definiert. Die zweite Leiterplatte kann im Gehäuse zwischen dem Motor und einer Mantelfläche des Gehäuses angeordnet sein. Die erste Leiterplatte und die zweite Leiterplatte stehen somit senkrecht zueinander.

### Gehäusekomponenten

Das Gehäuse kann zwei separate Mantelflächenteile umfassen, welche im zusammengebauten Zustand des Thermostaten miteinander verbunden sind, um das Gehäuse in Umfangsrichtung um die Längsachse zu schließen. Die beiden Mantelflächenteile können z.B. einen halbkreisförmigen Querschnitt umfassen. Das Gehäuse kann zusätzlich zu den Mantelflächenteilen eine einstückige Außenhülle umfassen, welche auf die zwei Mantelflächenteile gesetzt wird und eine Kontaktstelle der zwei Mantelflächenteile nach außen verdeckt. Hierdurch werden ein Eindringen von Staub und ein Ablagern von Schmutzpartikeln an der Kontaktstelle vermieden. Die Außenhülle kann im Querschnitt einen geschlossenen Ring bilden.

Optional können die zwei Mantelflächenteile gemeinsam den Gehäusevorsprung bilden. Jeder der zwei Mantelflächenteile kann einen radial nach außen hervorstehenden Wandabschnitt umfassen, welcher sich vom Gehäusevorsprung bis zu einem Bodenseitenende des Mantelflächenteils erstreckt. Die Außenhülle kann eine Aussparung aufweisen, welche in Form und Größe mit dem Gehäusevorsprung und den hervorstehenden Wandabschnitten übereinstimmt. Durch die Aussparung überdeckt die Außenhülle nicht den Gehäusevorsprung und auch nicht die hervorstehenden Wandabschnitte. Die hervorstehenden Wandabschnitte stehen gerade um eine Strecke hervor, welche gleich einer Wanddicke der Außenhülle ist. Im montierten Zustand ist eine Radialabmessung der hervorstehenden Wandabschnitte somit gleich einer Radialabmessung der Außenhülle, gemessen ab der zentralen Längsachse des Gehäuses. Außer ästhetischen Vorteilen hat dies auch den technischen Effekt, dass Staubablagerungen an Rillen bzw. Kontaktstellen der Gehäusekomponenten reduziert werden. Alternativ kann auch nur einer der zwei Mantelflächenteile einen hervorstehenden Wandabschnitt aufweisen, welcher sich wie beschrieben zwischen dem Gehäusevorsprung und dem bodenseitigen Ende der Mantelfläche befindet.

### Allgemeine Eigenschaften

Der Thermostat kann über weitere Komponenten verfügen, wie sie bei smarten Thermostaten bekannt sind. Beispielsweise kann ein Temperatursensor und/oder ein Luftfeuchtigkeitssensor vorhanden sein. Zudem können Funkkomponenten, beispielsweise ein WLAN-Modul oder andere Mittel für eine drahtlose Kommunikation, vorhanden sein. Hierrüber kann eine Kommunikation mit einem Smartphone oder anderen Geräten ermöglicht werden, so dass der Thermostat über das Smartphone gesteuert werden kann. Ein Mikrophon kann zur Sprachsteuerung vorhanden sein.

Die Befestigungsart des Thermostaten am Heizkörper kann in prinzipiell beliebiger bekannter Weise erfolgen. Beispielsweise kann, wie beschrieben, eine Überwurfmutter verwendet werden. Diese kann aber auch durch andere Schrauben, Schellen oder Halterungsringe ersetzt sein. Ein oder mehrere Montageadapter können ergänzt sein, um ein Befestigen der Thermostaten an verschiedenen Heizkörpern zu ermöglichen. Ein Montageadapter kann z.B. zwei verschiedene Gewinde umfassen, an welchen die Überwurfmutter und eine Komponente des Heizkörpers befestigt werden.

### KURZBESCHREIBUNG DER FIGUREN

Weitere Wirkungen und Merkmale der Erfindung werden nachstehend mit Bezug auf die beigefügten schematischen Figuren beschrieben:
- FIG. 1: ist eine schematische Darstellung eines Ausführungsbeispiels eines Thermostaten der Erfindung;
- FIG. 2A-2D: zeigen verschiedene Montagepositionen des Thermostaten an Heizkörpern;
- FIG. 3: zeigt schematisch eine Schnittansicht des Thermostaten von FIG. 1;
- FIG. 4: zeigt schematisch einen Thermostaten der Erfindung mit gelöster Bodenabdeckung; und
- FIG. 5: zeigt schematisch eine Explosionsdarstellung eines Thermostaten der Erfindung.

### DETAILLIERTE BESCHREIBUNG VON AUSFÜHRUNGSBEISPIELEN

Verschiedene Ausführungsbeispiele werden nachstehend mit Bezug auf die Figuren beschrieben. Gleiche und gleich wirkende Bestandteile sind in der Regel mit denselben Bezugszeichen gekennzeichnet.

### FIG. 1

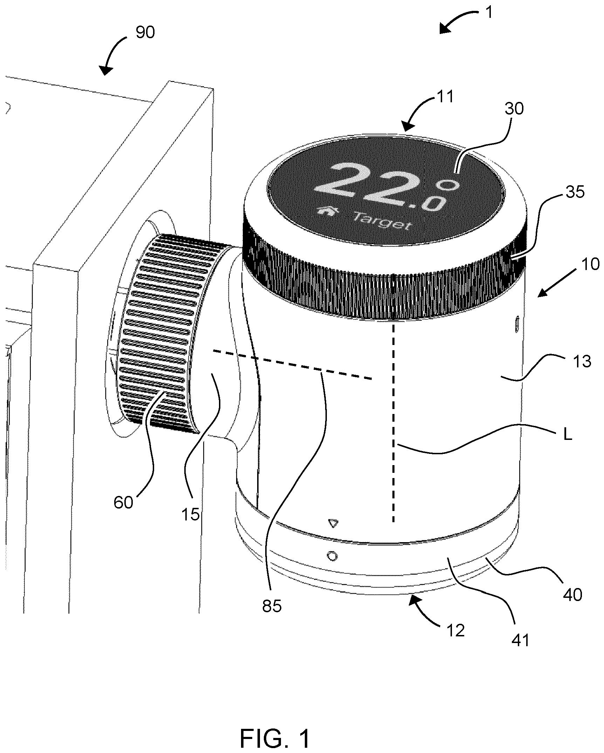

Ein Ausführungsbeispiel eines erfindungsgemäßen Thermostaten ist schematisch in FIG. 1 gezeigt. Der Thermostat 1 umfasst ein Gehäuse 10, welches eine Längsachse L und eine im Wesentlichen zylindrische Grundform hat. Ein Montagebereich zum Anschluss an einen Heizkörper 90 wird durch einen Gehäusevorsprung 15 gebildet, an dem eine Überwurfmutter 60 angeordnet ist. Die Überwurfmutter 60 wird an einem Heizkörperventil bzw. einem Gewinde des Heizkörpers 90 festgeschraubt. Der Thermostat 1 umfasst einen Motor, welcher ein Stellglied innerhalb des Gehäusevorsprungs 15 entlang einer Bewegungsrichtung 85 bewegt. Das Stellglied drückt gegen das Heizkörperventil und kann dieses betätigen.

Von herkömmlichen Thermostaten unterscheidet sich die erfindungsgemäße Ausführung insbesondere darin, dass der Gehäusevorsprung 15 und die Bewegungsrichtung 85 des Stellglieds des Motors quer zur Längsachse L stehen. Bei herkömmlichen Thermostaten ist die Bewegungsrichtung eines Stellglieds eines Motors hingegen parallel zur Längsachse L des Gehäuses. Dazu bildet bei herkömmlichen Thermostaten eine Bodenseite des Gehäuses den Anschlussbereich, wo eine Überwurfmutter der Montage des Thermostaten dient. Die Bodenseite kann daher bei herkömmlichen Thermostaten nicht für andere Funktionalitäten genutzt werden. Im Gegensatz dazu erlaubt die erfindungsgemäße Gestaltung, dass zwei Grundseiten des zylindrischen Gehäuses 10, das heißt eine Stirnseite 11 und eine Bodenseite 12, frei zugänglich und nutzbar sind.

Wie dargestellt, wird die Stirnseite 11 für einen Bildschirm 30 genutzt, beispielsweise einen LCD-Bildschirm, über welchen Einstellungen des Thermostaten darstellbar sind. Im Bereich der Stirnseite 11 ist zudem ein Einstellrad 35 vorhanden, welches von einem Nutzer gedreht und gedrückt werden kann, um Einstellungen einzugeben. Beispielsweise kann durch Drehen des Einstellrads 35 eine Solltemperatur verstellt werden und durch Drücken des Einstellrads 35 die geänderte Solltemperatur bestätigt werden. Das Einstellrad 35 kann sich am Rand der Stirnseite 11 oder an einer Mantelfläche 13 des Gehäuses 10 benachbart zur Stirnseite 11 befinden.

Die Bodenseite 12 des Gehäuses 10 wird von einer abnehmbaren Bodenabdeckung 40 geschlossen. Diese enthält eine wiederaufladbare Batterie 41 und kann vom übrigen Gehäuse 10 gelöst werden, um die Batterie 41 wiederaufzuladen. Die Bodenabdeckung 40 bildet außer der Bodenseite 12 auch einen unteren Teil der Mantelfläche 13, so dass die Bodenabdeckung 40 von einem Nutzer besser greifbar ist und durch eine Dreh-/ Zieh- und/oder Drückbewegung entnommen werden kann, ohne dass Werkzeuge benötigt werden. Die Bodenabdeckung 40 kann beispielsweise ein von außen nicht sichtbares Gewinde oder einen Bajonettanschluss umfassen, um am übrigen Gehäuse 10 verschraubt bzw. befestigt zu werden. Alternativ kann auch eine Einrastung an einer Innenseite des Bodenabdeckung 40 vorhanden sein, welche durch Drücken der Bodenabdeckung 40 in Richtung der Stirnseite 11 gelöst wird. Auch ein magnetischer Halt der Bodenabdeckung 40 ist möglich, womit die Bodenabdeckung 40 durch eine Ziehbewegung werkzeugfrei gelöst werden kann.

Die erfindungsgemäße Gestaltung ermöglicht, dass zwei Grundseiten des zylindrischen Gehäusekörpers für Funktionalitäten wie einen Bildschirm 30, ein Einstellrad 35 und eine entnehmbare Batterie 41 genutzt werden können, während im Stand der Technik nur eine einzige Grundseite hierfür bereitsteht. Würde die runde Mantelfläche 13 für eine dieser Funktionen genutzt, wäre ein komplizierter Aufbau mit unter Umständen reduziertem Nutzerkomfort die Folge. Beispielsweise umfassen manche herkömmliche Thermostate an der Mantelfläche einen Druckschalter, um eine Batteriefachabdeckung zu lösen. Würde ein flacher Bildschirm an der rundlichen Mantelfläche 13 integriert, müsste entweder die Form der Mantelfläche durchbrochen werden oder ein komplizierterer Aufbau wäre erforderlich, um die Gehäuseformung beizubehalten.

Weitere Vorteile des erfindungsgemäßen Thermostaten 1 werden mit Bezug auf die folgende Figur erläutert.

### FIG. 2A - 2D

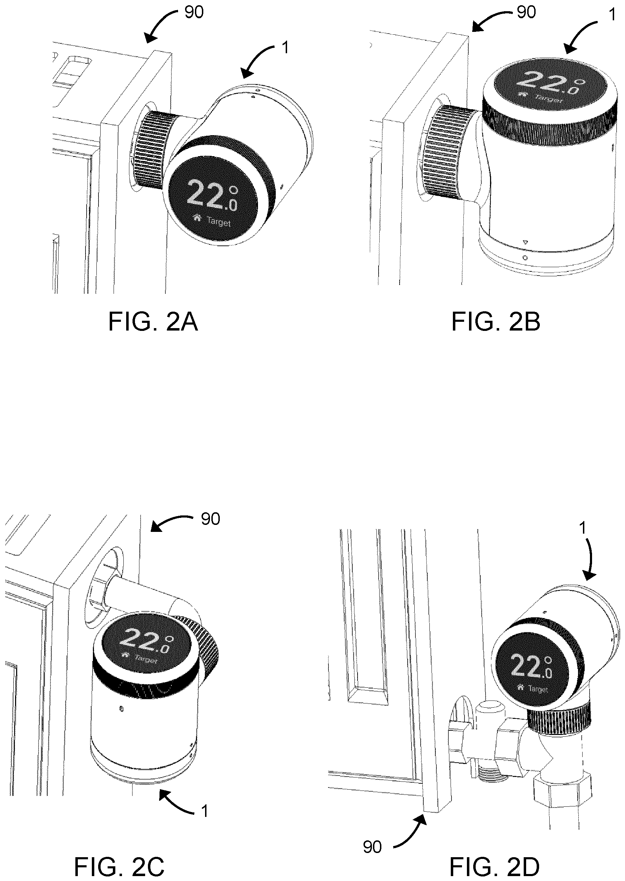

Die Figuren 2A bis 2D zeigen verschiedene Montage- und Betriebsanordnungen des Thermostaten 1 der vorhergehenden Figur. Heizkörper 90 unterscheiden sich in der Formung ihrer Rohrleitungen und der Anordnung ihrer Heizkörperventile. Dadurch unterscheiden sich die Orientierungen, in welcher der Thermostat 1 jeweils montiert werden muss. Unabhängig von der Art des Heizkörpers 90 und seiner Ventilposition sollte aber der Bildschirm des Thermostaten stets gut sichtbar sein. Dies ist je nach Raum in der Regel erfüllt, wenn der Bildschirm nach oben oder in das Zimmer rein zeigt. Im Fall eines Heizkörperventils wie bei den Figuren 2A und 2B kann der Thermostat 1 entweder so montiert werden, dass der Bildschirm in den Raum hinein zeigt (FIG. 2A) oder nach oben zeigt (FIG. 2B). Bei einem herkömmlichen Thermostaten mit Bildschirm an seiner Stirnseite und Montagebereich an seiner Bodenseite würde in diesen Fällen hingegen der Bildschirm nach rechts zeigen und somit eventuell auf eine benachbarte Wand gerichtet sein, womit der Bildschirm nicht ablesbar wäre.

Weil je nach Montageorientierung der Bildschirm des erfindungsgemäßen Thermostaten 1 aus verschiedenen Richtungen sichtbar ist, sollte ein dargestellter Inhalt auswählbar in verschiedenen Orientierungen angezeigt werden können. Zwischen den Montageorientierungen der Figuren 2B und 2C ist beispielsweise der dargestellte Inhalt um 90° gedreht, um eine bestmögliche Ablesbarkeit zu ermöglichen. Zu diesem Zweck enthält der Thermostat 1 eine Steuerelektronik, die dazu eingerichtet ist, den Bildschirminhalt schrittweise, insbesondere in 90°-Schritten, zu drehen.

Damit die Bodenabdeckung in jeder Montagesituation gut zugänglich ist und problemfrei gelöst werden kann, sind kompakte Abmessungen des Thermostaten 1 bedeutsam. Durch die erfindungsgemäße Anordnung des Motors quer zur Längsachse des Thermostaten werden besonders kompakte Gehäuseabmessungen ermöglicht, was mit Bezug auf die folgende Figur näher beschrieben wird.

### FIG. 3

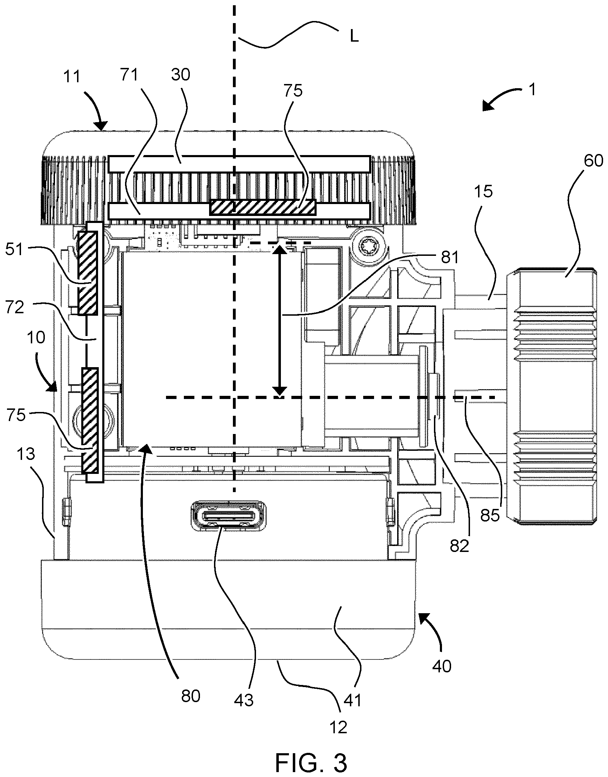

FIG. 3 zeigt eine Schnittansicht des Thermostaten 1 der vorherigen Figuren. Die Schnittansicht verläuft durch den Gehäusevorsprung 15 und parallel zur Längsachse L. Sichtbar sind insbesondere der Motor 80 und dessen Stellglied 82, welches auch als Übertragungsstift oder Stößel bezeichnet wird und vom Motor 80 entlang einer Bewegungsrichtung bzw. Bewegungsachse 85 bewegt werden kann. Im montierten Zustand kann das Stellglied 82 gegen ein Ventilteil drücken, um das Heizungsventil zu schließen, oder abhängig vom Ventilaufbau zum Öffnen des Ventils. Der Motor 80 und dessen Stellglied 82 können aus der zylindrischen Form des Gehäuses 10 seitlich hinausragen, in den Gehäusevorsprung 15 hinein. Hierdurch kann ein Durchmesser des zylindrischen Gehäuses 10 reduziert werden. Ein minimal möglicher Zylinderdurchmesser wird maßgeblich durch die Abmessungen des Motors 80 bestimmt. In der dargestellten Gestaltung befindet sich lediglich eine Leiterplatte 72 zwischen dem axialen Ende des Motors 80 und der Mantelfläche 13 des Gehäuses 10.

Ein herkömmlicher Thermostat würde bei der in FIG. 3 gezeigten Anordnung des Motors 80 und der Überwurfmutter 60 ein zylindrisches Gehäuse aufweisen, dessen Längsachse parallel zur Bewegungsachse 85 liefe, also in der Zeichnungsebene von links nach rechts. Eine Stirnseite des Gehäuses würde somit nach links zeigen. Würde an der Stirnseite der Bildschirm mit zugehöriger Elektronik angeordnet, wären die Gehäuseabmessungen in der Richtung von links nach rechts größer als beim gezeigten Thermostaten 1. Auch wenn an der Stirnseite eines Thermostaten ein abnehmbarer Deckel mit Batteriepack montiert wäre, wären hierdurch die Abmessungen größer als in der gezeigten erfindungsgemäßen Ausführung. Außerdem sind beim gezeigten Thermostaten 1 die Abmessungen des zylindrischen Gehäuses 1 in Richtung der Längsachse 1 kürzer als die Abmessungen eines herkömmlichen Thermostaten in Richtung seiner Längsachse. Dies liegt unter anderem daran, dass eine Breite des Motors 80 kleiner ist als dessen Länge (in Richtung der Bewegungsachse 85).

Der Motor 80 kann um die Bewegungsachse 85 asymmetrisch geformt sein. In FIG. 3 ist eine maximale Radialabmessung 81 des Motors 80 eingezeichnet, das heißt die maximale Abmessung des Motors 80 senkrecht zur Bewegungsachse 85. Je nach Ausführungsvariante kann der Motor 80 so um die Bewegungsachse 85 gedreht angeordnet sein, dass die maximale Radialabmessung 81 zum Bildschirm 30 oder zur Bodenabdeckung 40 mit der Batterie 41 hin ragt. Im gezeigten Beispiel ist neben dem Bildschirm 30 eine zugehörige Leiterplatte 71 und Steuerelektronik 75 für insbesondere den Bildschirm 30 angeordnet. Nimmt der Bildschirm 30 mit zugehöriger Steuerelektronik 75 weniger Raum in Richtung der Längsachse L ein als die Bodenabdeckung 40 mit Batterie 41, so kann der Motor 80 mit seiner maximalen Radialabmessung 81 zum Bildschirm 30 hin angeordnet sein, wie dargestellt. Andernfalls kann der Motor 80 mit seiner maximalen Radialabmessung 81 zur Bodenabdeckung 40 hin angeordnet sein.

Im gezeigten Beispiel stehen die Leiterplatte 71, welche auch als erste Leiterplatte bezeichnet wird, und die Leiterplatte 72, welche auch als zweite Leiterplatte bezeichnet wird, senkrecht zueinander. Dies ist für eine kompakte Bauform des Gehäuses 10 förderlich. Die Steuerelektronik 75 der Leiterplatte 72 kann insbesondere für ein Batteriemanagement zuständig sein.

Eine optionale sekundäre wiederaufladbare Batterie 51 ist innerhalb des Gehäuses 10 aufgenommen. Wird die Bodenabdeckung 40 mit der wiederaufladbaren Batterie 41 entnommen, können elektronische Komponenten des Thermostaten 1 mit Hilfe der Batterie 51 weiterhin mit Energie versorgt werden. Ist die Bodenabdeckung 40 mit der wiederaufladbaren Batterie 41 wieder montiert, ordnet die Steuerelektronik 75 ein Laden der sekundären wiederaufladbaren Batterie 51 mit Hilfe der Batterie 41 an.

Im dargestellten Fall weist die Bodenabdeckung 40 an einer Innenseite, welche im zusammengebauten Zustand im Gehäuseinneren liegt, elektrische Kontakte 43 auf. Die elektrischen Kontakte 43 können durch einen Steckanschluss, beispielsweise eine (USB-)Buchse, zum Verbinden eines Kabels mit Stecker bilden oder prinzipiell auch durch einen Stecker gebildet sein. In Abwandlungen dieser Ausführung kann die Bodenabdeckung 40 außer einer Elektronik auch Spulen zum induktiven Laden der Batterie 41 beinhalten, ohne dass eine Steckverbindung und elektrische Kontakte 43 erforderlich wären.

### FIG. 4

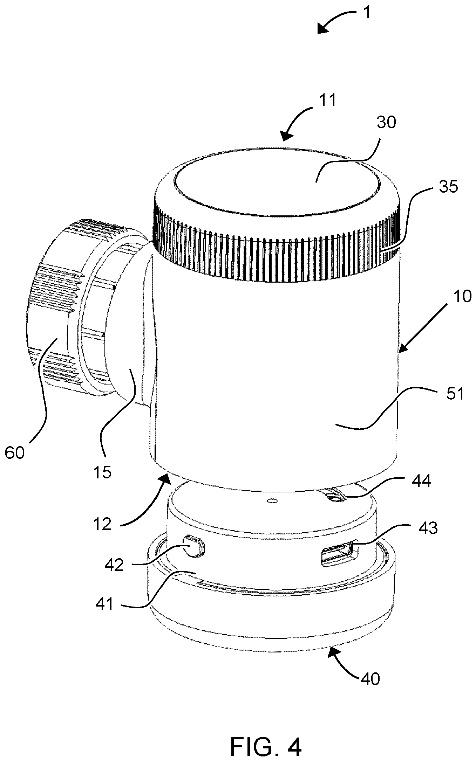

FIG. 4 zeigt einen Thermostaten 1 entsprechend den vorherigen Figuren mit gelöster Bodenabdeckung 40. Die Batterie 41 ist innerhalb der Bodenabdeckung 40 aufgenommen. Indem die Batterie 41 vollständig von der Bodenabdeckung 40 umschlossen ist, ist die Batterie 41 einem Nutzer nicht direkt zugänglich. Dadurch wird ausgeschlossen, dass ein Nutzer versehentlich eine ungeeignete Batterie einsetzt, welche zu Beeinträchtigungen des Betriebs des Thermostaten 1 führen könnte.

Eine Batteriestatus-Anzeige 42 an der Bodenabdeckung 40, beispielsweise ein oder mehrere verschiedenfarbige LEDs, erlauben eine Warnung, wenn der Batteriestand niedrig ist und/oder zeigen an, ob ein Ladevorgang der wiederaufladbaren Batterie 41 noch läuft oder bereits abgeschlossen ist.

Zudem zeigt FIG. 4 elektrische Kontakte 44 der Bodenabdeckung zum Herstellen einer elektrischen Verbindung mit übrigen Komponenten des Thermostaten, welche im übrigen Gehäuse 10 aufgenommen sind.

### FIG. 5

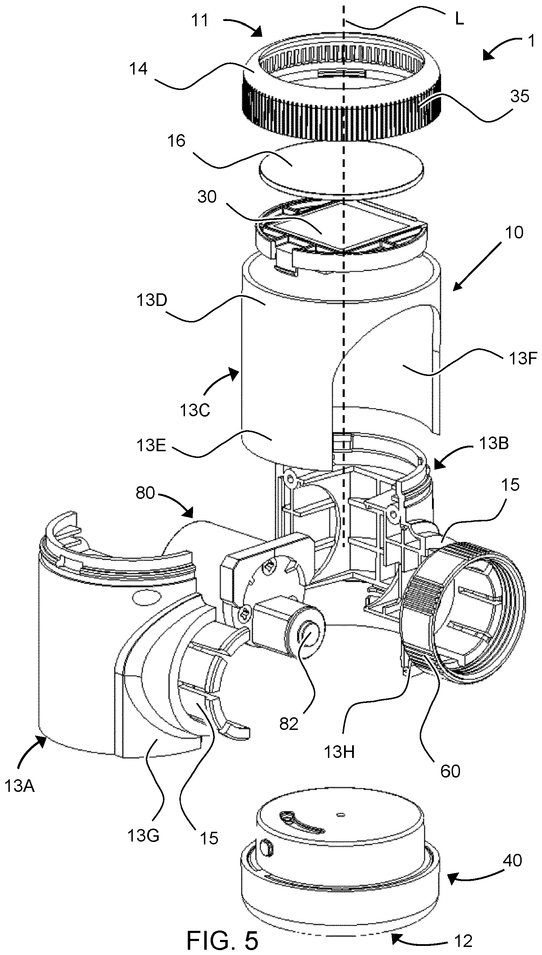

FIG. 5 zeigt eine Explosionsdarstellung von Komponenten des Thermostaten 1 der vorherigen Figuren. Das Gehäuse 10 umfasst insbesondere zwei Mantelflächenteile 13A und 13B, welche jeweils einen schalen- oder halbkreisförmigen Abschnitt umfassen. Aneinandergesetzt ergeben diese halbkreisförmigen Abschnitte eine geschlossene Ringform um die Längsachse L. Die beiden Mantelflächenteile 13A und 13B umfassen außerdem jeweils einen quer oder senkrecht zur Längsachse L abstehenden Abschnitt. Diese Abschnitte ergeben zusammengesetzt den hervorstehenden Gehäusevorsprung 15. Der Gehäusevorsprung 15 kann einen kreisförmigen Querschnitt haben, dessen zentrale Achse sich parallel zur Bewegungsrichtung des Stellglieds bzw. senkrecht zur Längsachse L erstreckt. Das Gehäuse 10 umfasst außerdem eine Außenhülle 13C, welche auf die beiden aneinandergesetzten Mantelflächenteile 13A und 13B geführt ist. Die Außenhülle 13C weist einen Abschnitt mit geschlossener Ringform 13D auf. Zudem weist die Außenhülle 13C einen entlang der Längsachse L hierauf folgenden Abschnitt 13E auf, in welchem durch eine Aussparung 13F eine offene Ringform gebildet ist. Die Außenhülle 13C überdeckt eine Kontaktstelle der beiden Mantelflächenteile 13A und 13B (in FIG. 5 insbesondere hinter dem Motor 80), wodurch Schmutz- oder Staubablagerungen an der Kontaktstelle vermieden werden. Die Aussparung 13F gibt den Bereich des Gehäusevorsprungs 15 frei, welcher im zusammengebauten Zustand durch die Aussparung 13F hindurch nach außen ragt.

Die beiden Mantelflächenteile 13A und 13B umfassen jeweils einen hervorstehenden Wandabschnitt 13G und 13H. Diese ragen im zusammengebauten Zustand in die Aussparung 13F und schließen diese ab. Dadurch wird der Halt und eine Dichtungsfunktion der Außenhülle 13C verbessert.

FIG. 5 zeigt weiterhin, dass an der Stirnseite 11 des Gehäuses 10 eine stirnseitige Gehäuseabdeckung 14 angebracht ist. Das drehbare Einstellrad 35 kann entweder durch die stirnseitige Gehäuseabdeckung 14 gebildet sein oder von außen zugänglich an der stirnseitigen Gehäuseabdeckung 14 angeordnet sein. Innerhalb der stirnseitigen Gehäuseabdeckung 14 kann der Bildschirm (in FIG. 5 nicht gezeigt) angeordnet werden. Die stirnseitige Gehäuseabdeckung 14 kann ringförmig gebildet sein, um den Bildschirm nicht zu verdecken. Eine transparente Abdeckung 16 kann die Stirnseite 11 dichtend schließen.

Die zu den Figuren beschriebenen Eigenschaften können miteinander kombiniert werden. Die beschriebenen Ausführungsbeispiele sind rein illustrativ und Abwandlungen hiervon sind im Rahmen der beigefügten Ansprüche möglich. Insbesondere kann eine Querschnittsform des Gehäuses 10, das heißt ein Schnitt senkrecht zur Längsachse L, in der Form variieren. Im gezeigten Beispiel ist der Querschnitt kreisförmig, wobei aber auch andere Formen möglich sind, z.B. ein Oval oder ein Quadrat mit abgerundeten Ecken. Entlang der Längsachse L kann der Querschnitt konstant sein (bis auf den Gehäusevorsprung 15), oder in der Größe variieren. Die gezeigte Anordnung, in welcher die Bewegungsachse 85 senkrecht zur Längsachse L steht, kann auch dahingehend variiert werden, dass ein Winkel zwischen 70° und 110° gebildet wird.

### Bezugszeichenliste

- 1: Thermostat
- 10: Gehäuse
- 11: Stirnseite des Gehäuses
- 12: Bodenseite des Gehäuses
- 13: Mantelfläche des Gehäuses
- 13A, 13B: Mantelflächenteile
- 13C: Außenhülle
- 13D: Abschnitt der Außenhülle mit geschlossener Ringform
- 13E: Abschnitt der Außenhülle mit offener Ringform
- 13F: Aussparung
- 13G, 13H: hervorstehende Wandabschnitte der Mantelflächenteile 13A, 13B
- 14: stirnseitige Gehäuseabdeckung
- 15: Gehäusevorsprung
- 16: transparente Abdeckung
- 30: Bildschirm
- 35: Einstellrad
- 40: Bodenabdeckung
- 41: wiederaufladbare Batterie
- 42: Batteriestatus-Anzeige
- 43: elektrische Kontakte der Bodenabdeckung
- 51: sekundäre wiederaufladbare Batterie
- 60: Überwurfmutter
- 71: erste Leiterplatte
- 72: zweite Leiterplatte
- 75: Steuerelektronik
- 80: Motor
- 81: maximale Radialabmessung des Motors relativ zur Bewegungsachse seines Stellglieds
- 82: Stellglied des Motors
- 85: Bewegungsrichtung / Bewegungsachse des Stellglieds
- 90: Heizkörper
- L: Längsachse

## Patentansprüche

1. Thermostat zum Einstellen eines Heizkörperventils, umfassend ein Gehäuse (10) mit einer Längsachse (L), welche sich von einer Bodenseite (12) des Gehäuses (10) in Richtung einer Stirnseite (11) des Gehäuses (10) erstreckt,
einen im Gehäuse (10) angeordneten Motor (80) mit einem Stellglied (82) zum Einwirken auf das Heizkörperventil und
einen Bildschirm (30) an der Stirnseite (11) des Gehäuses (10);
wobei der Motor (80) quer zur Längsachse (L) angeordnet ist, so dass eine Bewegungsachse (85) des Stellglieds (82) quer zur Längsachse (L) steht; **dadurch gekennzeichnet,**
**dass** der Thermostat eine im Gehäuse (10) angeordnete Steuerelektronik (75) umfasst, welche dazu eingerichtet ist, auf dem Bildschirm (30) einen Inhalt auswählbar in verschiedenen Orientierungen anzuzeigen.

2. Thermostat nach vorstehendem Anspruch,
wobei der Motor (80) senkrecht zur Längsachse (L) angeordnet ist, so dass die Bewegungsachse (85) des Stellglieds (82) senkrecht zur Längsachse (L) steht.

3. Thermostat nach einem der vorstehenden Ansprüche,
wobei das Gehäuse (10) eine Mantelfläche (13) zwischen der Stirnseite (11) und der Bodenseite (12) aufweist, wobei an der Mantelfläche (13) ein nach außen hervorstehender Gehäusevorsprung (15) gebildet ist, wobei am Gehäusevorsprung (15) eine Überwurfmutter (60) zur Montage des Thermostaten (1) an einem Heizkörper (90) angeordnet ist, und wobei das Stellglied (82) des Motors (80) in den Gehäusevorsprung (15) hineinragt.

4. Thermostat nach dem unmittelbar vorstehenden Anspruch,
wobei eine zentrale Achse der Überwurfmutter (60) senkrecht zur Längsachse (L) des Gehäuses (10) steht.

5. Thermostat nach einem der vorstehenden Ansprüche,
wobei an der Bodenseite (12) eine abnehmbare Bodenabdeckung (40) angeordnet ist; und
wobei die Bodenabdeckung (40) mit einer wiederaufladbaren Batterie (41) verbunden ist, so dass die wiederaufladbare Batterie (41) gemeinsam mit der Bodenabdeckung (40) abnehmbar ist.

6. Thermostat nach dem unmittelbar vorstehenden Anspruch,
wobei die Bodenabdeckung (40) an einer Innenseite elektrische Kontakte (43) zum Herstellen einer elektrischen Verbindung zum Aufladen der wiederaufladbaren Batterie (41) umfasst.

7. Thermostat nach Anspruch 5 oder 6,
wobei die Bodenabdeckung (40) eine Batteriestatus-Anzeige (42) aufweist.

8. Thermostat nach einem der Ansprüche 5 bis 7,
wobei im Gehäuse (10) eine sekundäre wiederaufladbare Batterie (51) angeordnet ist, wobei eine Steuerelektronik (75) im Gehäuse (10) dazu eingerichtet ist, die sekundäre wiederaufladbare Batterie (51) über die wiederaufladbare Batterie (41) der Bodenabdeckung (40) aufzuladen und im Fall, dass die Bodenabdeckung (40) mit der wiederaufladbaren Batterie (41) abgenommen ist, die sekundäre wiederaufladbare Batterie (51) zur Energieversorgung des Bildschirms (30) und des Motors (80) zu nutzen.

9. Thermostat nach einem der vorstehenden Ansprüche,
wobei ein Außenrand der Stirnseite (11) ein drehbares Einstellrad (35) bildet, welches eine Steuerung des Thermostaten ermöglicht.

10. Thermostat nach einem der vorstehenden Ansprüche,
wobei die Steuerelektronik (75) dazu eingerichtet ist, den auf dem Bildschirm (30) dargestellten Inhalt auswählbar in 90°-Schritten zu drehen.

11. Thermostat nach einem der vorstehenden Ansprüche,
wobei das Gehäuse (10) zwei Mantelflächenteile (13A, 13B) umfasst, welche aneinandergesetzt sind, um das Gehäuse (10) in Umfangsrichtung um die Längsachse (L) zu schließen,
wobei das Gehäuse (10) eine einstückige Außenhülle (13C) umfasst, welche auf die zwei Mantelflächenteile (13A, 13B) gesetzt ist und eine Kontaktstelle der zwei Mantelflächenteile (13A, 13B) verdeckt.

12. Thermostat nach dem unmittelbar vorstehenden Anspruch,
wobei die zwei Mantelflächenteile (13A, 13B) gemeinsam den Gehäusevorsprung (15) bilden, wobei jeder der zwei Mantelflächenteile (13A, 13B) einen radial nach außen hervorstehenden Wandabschnitt (13G, 13H) umfasst, wobei sich der hervorstehende Wandabschnitt (13G, 13H) vom Gehäusevorsprung (15) bis zu einem Bodenseitenende des Mantelflächenteils (13A, 13B) erstreckt;
wobei die Außenhülle (13C) eine Aussparung (13F) aufweist, welche in Form und Größe mit dem Gehäusevorsprung (15) und den hervorstehenden Wandabschnitten (13G, 13H) übereinstimmt;
wobei die hervorstehenden Wandabschnitte (13G, 13H) gerade um eine Strecke hervorstehen, welche gleich einer Wanddicke der Außenhülle (13C) ist.

13. Thermostat nach einem der Ansprüche 5 bis 12,
wobei der Motor (80) um die Bewegungsachse (85) des Stellglieds (82) verschiedene Radialabmessungen hat, wobei eine Ausrichtung des Motors (80) im Gehäuse (10) so gewählt ist, dass eine maximale Radialabmessung (81) des Motors (80) zum Bildschirm (30) hin gewandt ist, um zu der Bodenseite (12) hin Raum für die wiederaufladbare Batterie (41) bereitzustellen.

14. Thermostat nach einem der Ansprüche 5 bis 13,
wobei im Gehäuse (10) eine erste Leiterplatte (71) mit Komponenten zur Steuerung des Bildschirms (30) und eine zweite Leiterplatte (72), die mit der wiederaufladbaren Batterie (41) wirkungsmäßig verbunden ist, angeordnet sind, wobei die erste Leiterplatte (71) im Gehäuse (10) zur Stirnseite (11) hin angeordnet ist,
wobei die zweite Leiterplatte (72) im Gehäuse (10) zwischen dem Motor (80) und einer Mantelfläche (13) des Gehäuse (10) angeordnet ist, und wobei die erste Leiterplatte (71) und die zweite Leiterplatte (72) senkrecht zueinander stehen.

## Claims

1. Thermostat for adjusting a radiator valve, comprising a housing (10) with a longitudinal axis (L) which extends from a bottom side (12) of the housing (10) towards a front side (11) of the housing (10),
a motor (80) arranged in the housing (10) with an actuator (82) for acting on the radiator valve and
a screen (30) on the front side (11) of the housing (10);
wherein the motor (80) is arranged transversely to the longitudinal axis (L) so that a movement axis (85) of the actuator (82) is transverse to the longitudinal axis (L);
**characterized in that**
the thermostat comprises control electronics (75) arranged in the housing (10), which are designed to display content on the screen (30) in a selectable manner in different orientations.

2. Thermostat according to the preceding claim,
wherein the motor (80) is arranged perpendicular to the longitudinal axis (L), so that the movement axis (85) of the actuator (82) is perpendicular to the longitudinal axis (L).

3. Thermostat according to one of the preceding claims,
wherein the housing (10) has a jacket surface (13) between the front side (11) and the bottom side (12), wherein an outwardly projecting housing projection (15) is formed on the jacket surface (13), wherein a union nut (60) for mounting the thermostat (1) on a radiator (90) is arranged at the housing projection (15), and wherein the actuator (82) of the motor (80) projects into the housing projection (15).

4. Thermostat according to the immediately preceding claim,
wherein a central axis of the union nut (60) is perpendicular to the longitudinal axis (L) of the housing (10).

5. Thermostat according to one of the preceding claims,
wherein a removable bottom cover (40) is arranged on the bottom side (12); and wherein the bottom cover (40) is coupled to a rechargeable battery (41) so that the rechargeable battery (41) is removable together with the bottom cover (40).

6. Thermostat according to the immediately preceding claim,
wherein the bottom cover (40) comprises electrical contacts (43) on an inner side for establishing an electrical connection for charging the rechargeable battery (41).

7. Thermostat according to claim 5 or 6,
wherein the bottom cover (40) has a battery status indicator (42).

8. Thermostat according to one of claims 5 to 7,
wherein a secondary rechargeable battery (51) is arranged in the housing (10), wherein control electronics (75) in the housing (10) are configured to charge the secondary rechargeable battery (51) via the rechargeable battery (41) of the base cover (40) and, in the event that the base cover (40) with the rechargeable battery (41) is removed, to use the secondary rechargeable battery (51) to supply energy to the screen (30) and the motor (80).

9. Thermostat according to one of the preceding claims,
wherein an outer edge of the front side (11) forms a rotatable adjustment wheel (35) which enables control of the thermostat.

10. Thermostat according to one of the preceding claims,
wherein the control electronics (75) are configured to selectably rotate the content displayed on the screen (30) in 90° increments.

11. Thermostat according to one of the preceding claims,
wherein the housing (10) comprises two lateral surface parts (13A, 13B) which are placed together to close the housing (10) in the circumferential direction about the longitudinal axis (L),
wherein the housing (10) comprises a one-piece outer shell (13C) which is placed on the two shell surface parts (13A, 13B) and covers a contact point of the two shell surface parts (13A, 13B).

12. Thermostat according to the immediately preceding claim,
wherein the two lateral surface parts (13A, 13B) together form the housing projection (15), wherein each of the two lateral surface parts (13A, 13B) comprises a radially outwardly projecting wall portion (13G, 13H), wherein the projecting wall portion (13G, 13H) extends from the housing projection (15) to a bottom side end of the lateral surface part (13A, 13B);
wherein the outer shell (13C) has a recess (13F) which corresponds in shape and size to the housing projection (15) and the protruding wall portions (13G, 13H);
wherein the protruding wall portions (13G, 13H) protrude by a distance which is equal to a wall thickness of the outer shell (13C).

13. Thermostat according to one of claims 5 to 12,
wherein the motor (80) has different radial dimensions about the axis of movement (85) of the actuator (82), wherein an orientation of the motor (80) in the housing (10) is selected such that a maximum radial dimension (81) of the motor (80) faces the screen (30) in order to provide space for the rechargeable battery (41) towards the bottom side (12).

14. Thermostat according to one of claims 5 to 13,
wherein a first circuit board (71) with components for controlling the screen (30) and a second circuit board (72) which is operatively connected to the rechargeable battery (41) are arranged in the housing (10),
wherein the first circuit board (71) is arranged in the housing (10) towards the front side (11),
wherein the second circuit board (72) is arranged in the housing (10) between the motor (80) and a jacket surface (13) of the housing (10), and
wherein the first circuit board (71) and the second circuit board (72) are perpendicular to each other.

## Revendications

1. Thermostat de réglage d'une vanne de radiateur, comprenant un boîtier (10) avec un axe longitudinal (L) qui s'étend d'un côté inférieur (12) du boîtier (10) vers un côté avant (11) du boîtier (10),
un moteur (80) disposé dans le boîtier (10) avec un actionneur (82) pour agir sur la vanne de radiateur et
un écran (30) sur la face avant (11) du boîtier (10) ;
dans lequel le moteur (80) est disposé transversalement à l'axe longitudinal (L) de sorte qu'un axe de mouvement (85) de l'actionneur (82) est transversal à l'axe longitudinal (L) ;
**caractérisé en ce que**
le thermostat comprend une électronique de commande (75) disposée dans le boîtier (10), qui est conçue pour afficher le contenu sur l'écran (30) de manière sélectionnable dans différentes orientations.

2. Thermostat selon la revendication précédente,
dans lequel le moteur (80) est disposé perpendiculairement à l'axe longitudinal (L), de sorte que l'axe de mouvement (85) de l'actionneur (82) est perpendiculaire à l'axe longitudinal (L).

3. Thermostat selon l'une des revendications précédentes,
dans lequel le boîtier (10) présente une surface d'enveloppe (13) entre le côté avant (11) et le côté inférieur (12), dans lequel une saillie de boîtier (15) faisant saillie vers l'extérieur est formée sur la surface d'enveloppe (13), dans lequel un écrou-raccord (60) pour le montage du thermostat (1) sur un radiateur (90) est disposé sur la saillie de boîtier (15), et dans lequel l'actionneur (82) du moteur (80) fait saillie dans la saillie de boîtier (15).

4. Thermostat selon la revendication immédiatement précédente,
dans lequel un axe central de l'écrou-raccord (60) est perpendiculaire à l'axe longitudinal (L) du boîtier (10).

5. Thermostat selon l'une des revendications précédentes,
dans lequel un couvercle inférieur amovible (40) est disposé sur le côté inférieur (12) ; et
dans lequel le couvercle inférieur (40) est connecté à une batterie rechargeable (41) de sorte que la batterie rechargeable (41) est amovible avec le couvercle inférieur (40).

6. Thermostat selon la revendication immédiatement précédente,
dans lequel le couvercle inférieur (40) comprend sur un côté intérieur des contacts électriques (43) pour établir une connexion électrique pour charger la batterie rechargeable (41).

7. Thermostat selon la revendication 5 ou 6,
dans lequel le couvercle inférieur (40) comporte un indicateur d'état de la batterie (42).

8. Thermostat selon l'une des revendications 5 à 7,
dans lequel une batterie rechargeable secondaire (51) est disposée dans le boîtier (10), dans lequel une électronique de commande (75) dans le boîtier (10) est configurée pour charger la batterie rechargeable secondaire (51) via la batterie rechargeable (41) du couvercle de base (40) et, dans le cas où le couvercle de base (40) avec la batterie rechargeable (41) est retiré, pour utiliser la batterie rechargeable secondaire (51) pour alimenter en énergie l'écran (30) et le moteur (80).

9. Thermostat selon l'une des revendications précédentes,
dans lequel un bord extérieur du côté avant (11) forme une molette de réglage rotative (35) qui permet le contrôle du thermostat.

10. Thermostat selon l'une des revendications précédentes,
dans lequel l'électronique de commande (75) est configurée pour faire pivoter de manière sélective le contenu affiché sur l'écran (30) par incréments de 90°.

11. Thermostat selon l'une des revendications précédentes,
dans lequel le boîtier (10) comprend deux parties de surface de coque (13A, 13B) qui sont placées ensemble pour fermer le boîtier (10) dans la direction circonférentielle autour de l'axe longitudinal (L),
dans lequel le boîtier (10) comprend une coque extérieure monobloc (13C) qui est placée sur les deux parties de surface de coque (13A, 13B) et recouvre un point de contact des deux parties de surface de coque (13A, 13B).

12. Thermostat selon la revendication immédiatement précédente,
dans lequel les deux parties de surface latérale (13A, 13B) forment ensemble la saillie de boîtier (15), dans lequel chacune des deux parties de surface latérale (13A, 13B) comprend une partie de paroi faisant saillie radialement vers l'extérieur (13G, 13H), dans lequel la partie de paroi en saillie (13G, 13H) s'étend de la saillie de boîtier (15) à une extrémité latérale inférieure de la partie de surface latérale (13A, 13B) ;
dans laquelle la coque extérieure (13C) présente un évidement (13F) qui correspond en forme et en taille à la saillie du boîtier (15) et aux parties de paroi en saillie (13G, 13H) ;
dans lequel les parties de paroi en saillie (13G, 13H) font saillie d'une distance qui est égale à une épaisseur de paroi de la coque extérieure (13C).

13. Thermostat selon l'une des revendications 5 à 12,
dans lequel le moteur (80) présente des dimensions radiales différentes autour de l'axe de mouvement (85) de l'actionneur (82), dans lequel une orientation du moteur (80) dans le boîtier (10) est sélectionnée de telle sorte qu'une dimension radiale maximale (81) du moteur (80) soit tournée vers l'écran (30) afin de fournir un espace pour la batterie rechargeable (41) vers le côté inférieur (12).

14. Thermostat selon l'une des revendications 5 à 13,
dans lequel une première carte de circuit imprimé (71) avec des composants pour commander l'écran (30) et une seconde carte de circuit imprimé (72) qui est connectée de manière opérationnelle à la batterie rechargeable (41) sont disposées dans le boîtier (10),
dans lequel la première carte de circuit imprimé (71) est disposée dans le boîtier (10) vers le côté avant (11),
dans lequel la seconde carte de circuit imprimé (72) est disposée dans le boîtier (10) entre le moteur (80) et une surface d'enveloppe (13) du boîtier (10), et dans lequel la première carte de circuit imprimé (71) et la seconde carte de circuit imprimé (72) sont perpendiculaires l'une à l'autre.
